Europäisches Patentamt

European Patent Office

Office européen des brevets

(11) Veröffentlichungsnummer: **0 142 087**
**B1**

(12) EUROPÄISCHE PATENTSCHRIFT

(45) Veröffentlichungstag der Patentschrift: **14.03.90**

(51) Int. Cl.⁵: **G 11 B 33/04, G 11 B 23/02**

(21) Anmeldenummer: **84112983.6**

(22) Anmeldetag: **27.10.84**

(54) Aufbewahrungsbehälter, im wesentlichen von Quaderform, für flache Gegenstände.

(30) Priorität: **10.11.83 DE 8332322 u**

(43) Veröffentlichungstag der Anmeldung:
**22.05.85 Patentblatt 85/21**

(45) Bekanntmachung des Hinweises auf die
Patenterteilung:
**14.03.90 Patentblatt 90/11**

(84) Benannte Vertragsstaaten:
**AT BE DE FR GB NL SE**

(56) Entgegenhaltungen:
**EP-A-0 086 275**
**DE-A-2 061 884**
**DE-A-3 129 559**
**FR-A-2 107 622**
**GB-A-2 091 219**
**US-A-4 005 800**
**US-A-4 253 568**

(73) Patentinhaber: **BASF Aktiengesellschaft**
**Carl-Bosch-Strasse 38**
**D-6700 Ludwigshafen (DE)**

(72) Erfinder: **Willems, Martin**
**Elsheimerstrasse 13**
**D-6000 Frankfurt (DE)**
Erfinder: **Feilen, Albert**
**Mendelsohnstrasse 45**
**D-6000 Frankfurt (DE)**
Erfinder: **Urban, Otfried**
**Wilhelm-Kopp-Strasse 2**
**D-6200 Wiesbaden (DE)**

**Beschreibung**

Die Erfindung betrifft einen Aufbewahrungsbehälter, im wesentlichen von Quaderform, für flache Gegenstände, insbesondere Magnetaufzeichnungsträger in Hüllen, mit einem Bodenteil, bestehend aus Bodenwand und diese auf zwei Seiten begrenzenden Bodenteil-Seitenwänden, und mit einem Deckelteil, bestehend aus Deckelwand mit diese zumindest teilweise seitlich begrenzenden Deckelteil-Seitenwänden, und mit einer Gelenkeinrichtung zwischen Boden- und Deckelteil und mit jeweils an den Außenseiten der Deckelteil-Seitenwände oder an den Innenseiten der Bodenteil-Seitenwände angeordnetem Ringrand und mit jeweils an den anderen Seitenwänden vorgesehenen Gegenstücken zur schwenkwinkelabhängigen Zwangsverriegelung der Boden- und Deckelteile.

Mit der FR—A—1 430 704 ist für Kassetten ein zweiteiliger, aufklappbarer Behälter bekannt, bei dem der Deckelteil eine Aufnahmetasche für die Kassette und der Bodenteil eine der Vorderseite der Tasche entsprechenden Ausschnitte aufweist, in den die Vorderseite der Tasche bei geschlossenem Behälter zu liegen kommt, so daß ein geschlossenes, quaderförmiges Gehäuse gebildet wird. Deckel- und Bodenteile sind dabei über zwei Zapfen-Loch-Gelenke miteinander verbunden. Der Behälter eignet sich nicht als Display-Verpackung, die Gelenke sind primitiv und nicht belastbar und die Boden- und Deckelteile sind einfach voneinander trennbar und damit nicht unverlierbar.

Das Herausfallen der Kassette kann gemäß DE—B—23 66 195 durch Anbringen von Schwenkbegrenzungs-Vorsprüngen am Deckelteil, die im Falle einer 180°-Öffnung an den Stirnkanten der Seitenteile des Bodenteils anstoßen, zwar erschwert, aber in der Praxis nicht verhindert werden. Die zu leichte Trennung von Boden- und Deckelteil wird durch derartige Vorsprünge nicht beeinflußt.

Mit der DE—A—32 01 487 ist ein einstückig hergestellter Behälter für Magnetspeicherelemente, insbesonder sog. FlexyDisks® eingetragenes Warenzeichen der BASF Aktiengesellschaft, 6700 Ludwigshafen, bekannt, der als Klappetui ausgebildet ist und eine federnde Gelenkanordnung, sowie ein Abstützungsvorrichtung zwischen Behälterober- und -unterteil aufweist, so daß der Behälter offen als Aufstellbehälter und geschlossen als Archivbehälter verwendbar ist. Die Abstütz- und Sicherungsvorrichtung besteht dabei aus einem einfachen Anschlag an einer der Seitenwände oder einen Zapfem, der sich in einer Bodennut geführt verschiebt.

Aus der US—A—4 253 568 ist ein Behälter für Videocassetten bekannt, der eine Schwenkklappe besitzt, die mittels einer Langloch-Zapfen-Gelenkeinrichtung an den Behälterseitenteilen schwenkbar angeordnet ist und die an ihrem unteren Rand einen Ringsteg und einen Ringschlitz aus egenstück für eine schwenkwinkelabhängige Zwangsverriegelung der Schwenkklappe aufweist. Ringsteg und Ringschlitz sind Teil der Gleit-Gelenkeinrichtung, die die Langloch-Zapfen-Gelenkeinrichtung umfaßt, und sie haben Zweck, die Stabilität der Gelenkeinrichtung bei größerwerdendem Schwenkwinkel der Klappe zu vergrößern Die Montage von Behälter und Klappe ist schwierig, da sie in oder sehr nahe der Schließstellung der Schwenkklappe durch Auseinanderspreizen der Behälterwände erfolgen muß.

Es ist Aufgabe der vorliegenden Erfindung, die Teile eines zweiteiligen Behälters nahezu unverlierbar zu verriegeln trotz einfacher Herstellung und Montage der Behälterteile.

Die Lösung dieser Aufgabe geht aus Anspruch 1 hervor.

Damit werden Deckelteil und Bodenteil in definierter Stellung zueinander montierbar und ggf. in einer anderen, festlegbaren Stellung wieder voneinander lösbar. Die Ringrand-Hohlnut-Kombination erlaubt ein Hintergreifen von wenigstens einem Teil des Ringrandes durch das komplentär ausgebildete zweite Verriegelungsteil als Gegenstück.

Praktisch vorteilhaft kann die Hohlnut durch eine Hinterschneidung des Ringrandes gebildet werden, so daß eine Herstellung im Spritzguß und eine leichte Montage sowie eine gute Funktionsfähigkeit erreicht werden.

In praktischer Ausführung können die Bodenteil-Seitenwände an den Enden in Halbkreisform ausgebildet sein. Damit ergibt sich eine ausreichende Sicherheit gegen eine unbeabsichtigte Trennung und eine einfache Herstellung der Behälterteile.

In weiterer vorteilhafte Ausbildung kann der 100°-Bogen an den Behälterteilen derartig angeordnet sein, daß ein Außereingriffbringen der Verriegelungsteile (ausschließlich) in oder nahe der Schließlage der Behälterteile möglich ist.

Besonders zur Verwendung als Aufstell- oder Display-Behälter können in den Bodenteil-Seitenwänden parallel zum Anfasungsrad dazu konzentrische Schlitze mit jeweils einer der Ringrandbreite etwa entsprechenden Breite vorgesehen sein. Durch die Länge des Schlitzes kann der maximale Aufstellwinkel des Deckels voreingestellt werden.

Praktisch vorteilhaft kann das Gelenk aus je einem Zylindervorsprung an jeder Deckelteil-Seitenwand und einer entsprechend kreisrunden Öffnung an jeder Bodenteilseitenwand bestehen.

Zur Montageerleichterung können an den Zylindervorsprüngen und/oder an den Bodenteil-Seitenwandenden Anfasungen zum Darüberschieben der Bodenteil-Seitenwände vorgesehen sein.

In materialsparender Ausbildung des Behälters kann die Bodenwand eine Ausschnitt aufweisen, der an den Seiten von den Bodenteil-Seitenwänden begrenzt ist, und der Deckelteil kann mit einer Tasche, bestehend aus Vorderwand, Bodenwand und Seitenwänden ausgebildet sein, wobei der Umriß der Taschen-Vorderwand der Kontur des Bodenwand-Ausschnitts entspricht.

In günstiger Ausgestaltung weist die Taschen-vorderwand einen etwa U-Form-Ausschnitt zur sicheren Halterung des Gegenstands auf.

Damit wird ein in der Form der Snap-Pack für Kompaktkassetten entsprechender Behälter realisierbar.

Einzelheiten der Erfindung sind anhand von ausführungsbeispielen, die in der Zeichnung dargestellt sind, nachfolgend beschrieben.

Die Zeichnung zeigt in:

Figur 1 einen erfindungsgemäßen Behälter

Figure 2 die Seitenansicht des Deckelteils

Figure 3 eine Schnittdarstellung gemäß Schnittlinie III—III in Figure 2

Figur 4 eine Seitensicht des Bodenteils von innen

Figur 5 eine Draufsicht auf die Seitenwand in Richtung des Pfeils B in Figur 4.

Die Klappbox 10 besteht aus Boden- und Deckelteil 11 und 12, wobei innen an der Deckelwand 9 des Deckelteils 12 eine offene Tasche 13 zur Aufnahme eines oder mehrerer Gegenstände vorgesehen ist und die Bodenwand 14 mit einer Aussparung 15 versehen ist, deren Kontur dem Umriß der Vorderwand 16 der Tasche 13 entspricht. Die Klappbox 10 ist mit etwa um 90° hochgeklapptem Deckelteil 12 dargestellt, was der Display-Stellung der Klappbox 10 entspricht. Bei geschlossener Box 10 verschließt die Vorderwand 16 den Bodenausschnitt 15 und der oder die in der Tasche befindlichen Gegenstände, die z.B. quaderförmig oder auch mit beliebigem Umriß flach sein könne, wie z.B. Disketten, Schallplatten, Bandspulen, Filmspulen usw., sind rundherum gegen die Umgebung abgeschirmt.

Das Bodenteil 11 ist außer der Bodenwand 14 mit Seitenwänden 17 und 18 und einer mit allen Wänden verbundenen Frontwand 19 ausgebildet. Der Deckelteil 12 besitzt an der Tasche 13 eine etwa halbzylindermantelförmige Bodenwand 20, die in die Vorderwand 16 und die Taschenseitenwände 21 und 22 übergeht. Über eine Gelenkeinrichtung 23 sind die Boden- und Deckelteile 11 und 12 gelenkig schwenkbar miteinander verbunden. Die Elemente des Gelenks 23 sind etwa zylindrische, vorzugsweise stirnseitig vertiefte Zapfen 24 außen an den Taschenseitenwänden 21 und 22 und entsprechende Kreisaussparungen innen oder -durchbrüche 25 und den freien Enden 17a und 18a der Seitenwände 17 und 18 des Bodenteils 11. Die etwa kugelkalottenförmige Vertiefung der Stirnseite der Zapfen 24 ist herstellungsmäßig günstig, wegen Verminderung einer Materialanhäufung durch die Abkühlung nach Herstellung. Ohne den die Taschenseitenwand 21 überragenden Rand 26, der in den Ringrand 27 ausläuft und in Schließstellung auf die Oberkante der Seitenwand 17 zu liegen kommt, wäre die Verschwenkung des Deckelteils 12 bis zum Anstoßen der Außenseite der Deckelwand 9 und die Vorderkante der Bodenwand 14 möglich, also von der Schließstellung aus gerechnet wäre ein Schwenkwinkel von ca. 300° möglich. Bei entsprechend leichtgängigem Gelenk 23 wäre also ein Herausfallen des oder der aufzubewahrenden Gegenstände möglich und eine Aufstellung des Deckelteils 12 zur Benutzung der Box 10 als Display-Behälter wäre ebenfalls nicht denkbar. Allerdings wäre nach Änderung der Taschenbodenwand 20 in eine ebene Wand bei 90° eine Display-Stellung einstellbar und die Stellung bliebe stabil. Ein derartiges, nur aus den Elementes 24 und 25 bestehendes Gelenk 23 ist auch leicht und daher unabsichtlich trennbar, jedes der Teile 11 und 12 wird verlierbar und außerdem besteht die Gefahr, daß die freien Enden 17a und 18a der Seitenteile 17 und 18 abbrechen können, wodurch der Behälter unbrauchbar würde.

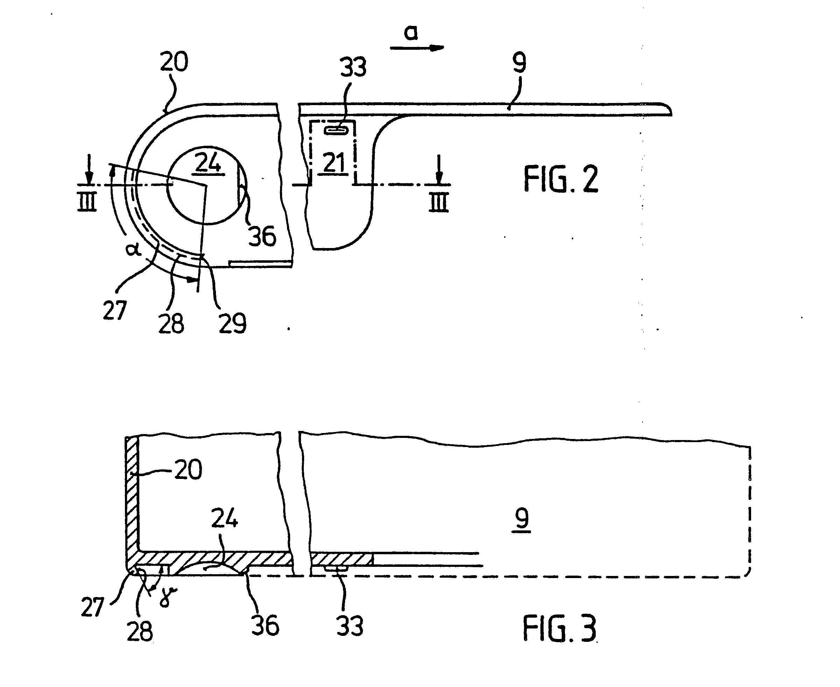

Letztere Nachteile werden durch eine Zwangsverriegelung des Gelenks 23 verhinderbar, wie im folgenden beschrieben wird, und wobei dem Ringrand 27 eine wichtige Bedeutung zukommt. Der Ringrand 27 ist, wie Figur 2 zeigt, mit einer Hohlnut 28 ausgebildet die vom Ende 29 des Ringrandes 27 um etwa $\alpha = 100°$ herum verläuft. Die Hohlnut 28 kann, wie in Figur 3 erkennbar, als Hinterschneidung des Ringrandes 27 ausgebildet sein, also im Querschnitt als Schräge mit geeignetem Winkel. Die Hohlnut kann jedoch auch im Querschnitt eine Stufenform aufweisen, wenn das Gegenstück, das zweite Verriegelungsteil, entsprechend komplementär stufenförmig geformt ist.

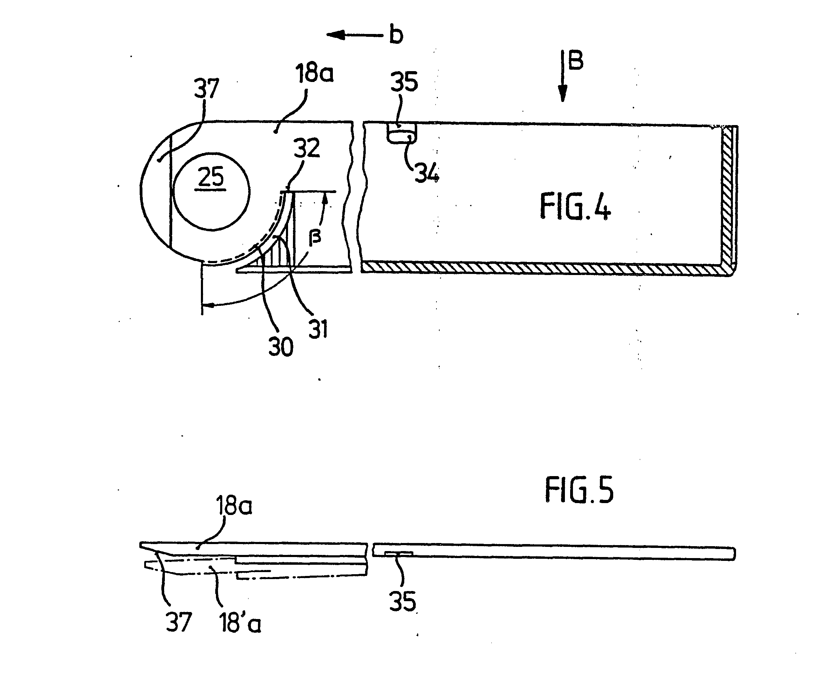

Im Falle einer Hinterschneidung 28 am Ringrand 27, als erstem Verriegelungsteil, besteht das zweite Verriegelungsteil aus einem Anfasungsrand 30 (Figur 4) konzentrisch zur Gelenköffnung 25, wobei der Anfasungsrand 30 entlang eines konzentrischen Schlitzes 31 im Seitenwande 17a bzw. 18a verläuft. Die Bogenlänge $(\beta)$ des Anfasungsrandes 30 entspricht dabei etwa der Bogenlänge $(\alpha)$ der Hinterschneidung 28.

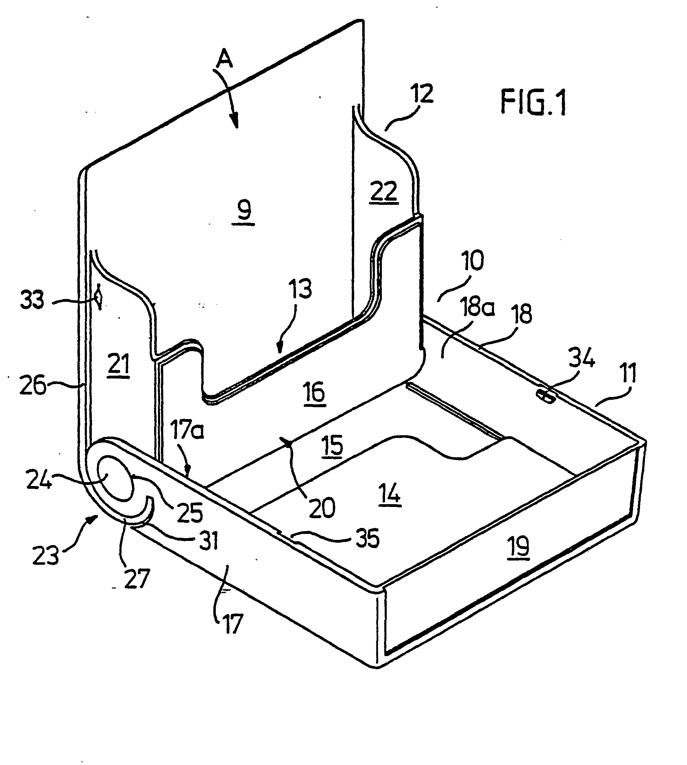

In der Display-Stellung der Box 10 in Figur 1 befindet sich die ganze Bogenlänge der Hinterschneidung 28 in Kontakt mit dem Anfasungsrand 30 und bildet damit die Stellung der größten Zwangsverriegelung.

Wird nun der Deckelteil 12 in Richtung des Pfeils A in Schließstellung geklappt, so bewegt sich der Anfasungsrand 30 aus der Hohlnut 28 immer mehr heraus, und, wenn er sie nahezu verläßt, ist ein seitliches Abspreizen des Ringteils des Seitenwandes 18a von den Zapfen 24 möglich und Deckel- und Bodenteil 12 und 11 sind leicht voneinander trennbar.

Es ist nicht notwendig, einen Schlitz 31 im Wandende 17a bzw. 18a vorzusehen, die schraffierte Ecke des Wandendes 18a könnte auch fortgelassen werden, wodurch allerdings ein Trennen der Teile 11 und 12 auch in Zwangsverriegelungsstellung der Figur 1 erleichtert würde. Durch Ausbildung der Schräge im Hohlnutquerschnitt als Stufe kann die Zwangsverriegelung noch verstärkt werden, denn dann ist bei entsprechender Dimensionierung eine Trennung nur in Bereichen erzielbar, in denen die Hohlnut mit ihrem Gegenstück quasi nicht mehr im Eingriff steht. Einlauf- und Auslaufschrägen könnten diesen Bereich etwas erweitern. Die Trennmöglichkeit ist bei einer Hinterschneidung/Anfasung sicher auch von dem Winkel der jeweiligen Schrägen (Querschnittswinkel γ) abhängig und von deren Grad an Übereinstimmung. Im Beispiel der Figur 3 beträgt der Winkel γ etwa 60°. Diese Winkelgröße ist beim gewählten Werkstoff und den Abmessungen für eine vollwertige Verriegelung hinreichend. Bei einem festeren Werkstoff und/oder Vergrößerung der Ringranddicke könnte ein Winkel von ca. 45° ebenfalls ausreichend sein. Der Winkel γ sollte daher etwa im Bereich von 45 bis 90°, vorzugsweise im Breich von 50 bis 75° liegen. Bei Herstellung der Hohlnut 28 als Hinterschneidung ist beim Spritzguß zur Entformung des Deckelteils 11 außer üblichen Seitenschiebern, die axial von den Zapfen 24 fortbewegt werden, in die Seitenschieber integrierte Schleppschieber für die Hohlnut 28 notwendig.

Der Schlitz 31 oder besser seine vorgebbar begrenzte Länge bilden eine Schwenkbegrenzung zwischen Deckel- und Bodenteil 12 und 11, da das Ende 29 des Ringrandes 27 am Schlitzende 32 anstößt. Grundsätzlich ist der Begrenzungswinkel durch geeignete Wahl der Schlitzlänge wählbar. Jedoch spielt zur Verhinderung des Umfallens der Box 10 aus ihrer Display-Stellung sowohl das Gewicht des aus- oder aufzustellenden Gegenstands oder der Gegenstände, als auch das Gewicht von Deckelteil 12 und Bodenteil 11 und ihr Gewichtsunterschied eine bei der Dimensionierung zu beachtende Rolle. Ein Aufstellwinkel von ca. 80° bis 100° hat sich für eine Packung von 10 Mini-FlexyDisks (R) (Maße ca. 150×150×35 mm) als günstig und standsicher erwiesen. Im Falle anderer, insbesondere längerer und/oder schwerer, aufzunehmender Körper empfiehlt sich eine Dimensionierung zu kleineren Winkeln hin bei sonst unveränderter Ausbildung der Deckel- und Bodenteile 12 und 11.

Wie in Figur 5 angedeutet können die Enden 18a bzw. 17a der Bodenseitenwände 18 und 17 nach dem Entformen und Abkühlen des Kunststoffmaterials, z.B. schlagfestes Polystyrol 454 C oder halbschlagfestes Polystyrol 427, die gestrichelt angedeutete, nach innen gerichtete Lage aufweisen, damit eine Vorspannung nach Montage erhalten bleibt, die sowohl die Schwenkbewegung der Teile dämpft als auch einer Trennung der Teile entgegenwirkt. Das ausgezogene Ende 18a entspricht seiner Einbaulage und 18'a seiner Lage vor dem Einbau. Der Abstand zwischen 18a und 18'a ist einstellbar und werkstoffabhängig.

Zur Verriegelung der Deckel- und Bodenteile 12 und 11 in Schließstellung kann z.B. am Taschenseitenteil 21, 22 je eine Verriegelungsnocke 33 vorgesehen sein, die sich beim Schließen in die entsprechende Einbuchtung 34 evtl. mit Anfasung 35, in der Nähe des Oberrandes der Bodenseitenwände 17 bzw. 18 legt. Damit ist die Sicherheit gegen unbeabsichtigtes Öffnen und Herausfallen des Gegenstands/der Gegenstände erhöht. Ein Herausfallen oder Herauskippen des Gegenstands in der Display-Stellung des Behälters ist zweckmäßig auch durch den etwa U-form-Ausschnitt der Vorderwand 16 der Tasche 13 und die dadurch seitlich hochgezogenen Vorderwandteile vermieden.

Die Montage der Boden- und Deckelteile 11 und 12 erfolgt durch Ineinanderschieben des Deckelteils 12 in der Lage in Figur 2 in Richtung des Pfeils a und des Bodenteils 11 in seiner gage in Figur 4 in Gegenrichtung (Pfeil b). Bei dieser Montage werden die Seitenwandenden 17a und 18a zuerst über die Taschenseitenwände 21 und 22 geführt und dann über die Zapfen 24 gespreizt, und die Endlage kann durch seitlichen Druck auf die Kreisringe der Teile 17a und 18a bewerkstelligt werden. In der letzten Phase schnappen die Anfasungsränder 30 in die Hinterschneidung 28 und damit sind die Boden- und Deckelteile 11 und 12 der Box 10 zusammengebaut und miteinander zwangsverriegelt. Abschrängungen 36, außen an den Zapfen 24, und 37, innen und den Wandenden 17a und 18a erleichtern das Montieren der Teile 11 und 12. Es ist grundsätzlich möglich, sowohl die Bögen der Winkel α und β der Verriegelungsteile größer oder kleiner oder auch unterschiedlich auszubilden oder am Ringrand 27 bzw. an den Ringteilen der Wandenden 17a und 18a anders anzuordnen. Die jeweils geeignete Bogenlänge hängt dabei auch von der Nachgiebigkeit des verwendeten Werkstoffs ab, als auch vom Querschnittswinkel γ der Hinterschneidung der Hohlnut 28 oder de stufenförmigen Verzahnung von Hohlnut und Gegenstück.

Die Erfindung wurde an einem Beispiel einer Klappbox 10 beschrieben. Selbstverständlich ist der Gegenstand der Erfindung an jeder Art von Behältern gemäß Oberbegriff des Patentanspruchs anwendbar. Es können also durchaus zwei quaderförmig offene Behälterteile über eine erfindungsgemäße Gelenk- und Verriegelungseinrichtung miteinander verbunden oder verbindbar sein.

Es sind zum Beispiel Änderungen am Verschluß des Behälters oder an der Schwenkbegrenzung oder an den Montageerleichterungseinrichtungen denkbar.

## Patentansprüche

1. Aufbewahrungsbehälter, im wesentlichen von Quaderform, für flache Gegenstände, insbesondere Magneta zeichnungsträger in Verpakung, mit einem Bodenteil (11), bestehend aus einer Bodenwand (14) und diese auf zwei Seiten begrenzenden Bodenteil-Seitenwänden (17, 18), und mit einem Deckelteil (12), bestehend aus einer Deckelwand (9) mit diese zumindest teilweise seitlich begrenzenden Deckelteil-Seitenwänden (21, 22), und mit einer Gelenkeinrichtung (23) zwischen Boden und Deckelteil (11 und 12), und mit jeweils an den Außenseiten der Deckelteil-Seitenwände (21 und 22) oder an den Innenseiten der Bodenteil-Seitenwände (17 und 18) angeordnetem Ringrand (27) und mit an den anderen Seitenwänden (17 und 18 bzw. 21 und 22) vorgesehenen Gegenstücken zur schwenkwinkelabhängigen Zwangsverriegelung der Boden- und Deckelteile (11 und 12), gekennzeichnet durch jeweils eine Hohlnut (28) am Ringrand (27) als erstem Verriegelungsteil und jeweils einen zumindest teilweise in die Hohlnut (28) eingreifenden zweiten Verriegelungsteil (30).

2. Behälter nach Anspruch 1, dadurch gekennzeichnet, daß die Hohlnut (28) durch eine Hinterschneidung des Ringrandes (27) gebildet wird.

3. Behälter nach Anspruch 2, dadurch gekennzeichnet, daß der Querschnittswinkel (γ) der Hinterschneidung zwischen 45 und 90°, insbesondere bei 60° liegt.

4. Behälter nach Anspruch 2, dadurch gekennzeichnet, daß die Bodenteil-Seitenwände (17 und 18) an den Enden (17a und 18a) Halbkreisform aufweisen, die an ihrem Umriß mit einem Anfasungsrand (30) versehen sind.

5. Behälter nach Anspruch 1 bis 4, dadurch gekennzeichnet, daß die Hinterschneidung der Hohlnut (28) und der Anfasungsrand (30) jeweils etwa eine 100°-Bogen Form besitzen.

6. Behälter nach Anspruch 4, dadurch gekennzeichnet, daß der 100°-Bogen an den Behälterteilen (11 und 12) derartig angeordnet ist, daß ein Außereingriffbringen der Bodenteil-Seitenwände (17 und 18) vom Deckelteil (12) ausschließlich in oder nahe der Schließlage der Behälterteile (11 und 12) möglich ist.

7. Behälter nach Anspruch 5, dadurch gekennzeichnet, daß in den Bodenteil-Seitenwänden (17 und 18) parallel zum Anfasungsrand (30) ein dazu konzentrischer Schlitz (31) mit einer der Breite des Ringrandes (27) etwa entsprechenden Breite vorgesehen ist.

8. Behälter nach Anspruch 1, dadurch gekennzeichnet, daß das Gelenk (23) aus je einem Zylinderversprung (24) an jeder Deckelteil-Seitenwand (21 und 22) und einer kreisförmigen Öffnung (25) an jeder Bodenteil-Seitenwand (17 und 18) besteht.

9. Behälter nach Anspruch 8, dadurch gekennzeichnet, daß zumindest an den Zylindervorsprüngen (24) Montageschrägen (36) zum Darüberschieben der Bodenteil-Seitenwände (17 und 18) vorgesehen sind.

10. Behälter nach Anspruch 8 oder 9, dadurch gekennzeichnet, daß an den Bodenteil-Seitenwandenden (17a und 18a) Montageabschrägungen (37) vorgesehen sind.

11. Behälter nach Anspruch 1 und einem oder mehreren der Ansprüche 2 bis 10, dadurch gekennzeichnet, daß die Bodenwand (14) des Bodenteils (11) einen Ausschnitt (15) aufweist, der seitlich von den Bodenteil-Seitenwänden (17, 18) begrenzt ist, und der Deckelteil (12) mit einer Tasche (13), bestehend aus Vorderwand (16), Bodenwand (20) und Seitenwänden (21, 22) ausgebildet ist, wobei der Umriß der Vorderwand (16) der Kontur des Ausschnitts (15) entspricht.

12. Behälter nach Anspruch 11, dadurch gekennzeichnet, daß die Vorderwand (18) einen zu ihrer Mitte symmetrischen etwa U-form-Ausschnitt aufweist und die Vorderwand (16) and den Seitenwänden (21, 22) hochgezogen ausgebildet ist.

13. Behälter nach Anspruch 1, dadurch gekennzeichnet, daß die Hohlnut (28) des Ringrandes (27) im Querschnitt mindestens eine Stufe aufweist und die Bodenteil-Seitenwandenden (17a und 18a) mit entsprechenden Stufenrändern ausgebildet sind.

## Revendications

1. Récipient, essentiellement de forme parallélépédique, pour la conservation d'objets plats, en particulier de supports d'enregistrement magnétique empaquetés, à partir fond (11), constituée d'une paroi de fond (14) et de parois latérales (17, 18) de partie fond délimitant de deux côtés cette paroi de fond, et à partie couvercle (12), constituée d'une paroi de couvercle (9), de parois latérales (21, 22) de partie couvercle, délimitant latéralement, au moins partiellement, cette paroi de couvercle, et avec un moyen d'articulation (23) entre fond et partie couvercle (11 et 12) et avec un bord annulaire (27) disposé respectivement sur les côtés extérieurs des parois latérales (21, 22) de partie couvercle ou sur les côtés intérieurs des parois latérales (17, 18) de partie fond et avec des contrepièces sur les autres parois latérales (17 et 18 ou 21 et 22) pour verrouiller automatiquement les parties fond et couvercle (11 et 12) en fonction de leur angle de pivotement, caractérisé respectivement par une rainure (28) sur le bord annulaire (27) comme première partie de verrouillage et une deuxième partie de verrouillage (30) en prise, au moins partiellement, dans la rainure (28).

2. Récipient selon la revendication 1, caractérisé par le fait que la rainure (28) est formée par coupe avec dépouille de bord annulaire (27).

3. Récipient selon la revendication 2, caractérisé par le fait que l'angle en section (γ) de la dépouille est compris entre 45 et 90, en particulier est 60.

4. Récipient selon la revendication 2, caractérisé par le fait que les parois latérales (17 et 18) de la partie font présentent à leurs extrémités (17a et 18a) une forme semi-circulaire, et sont munies, à leur périphérie d'un bord biseauté (30).

5. Récipient selon l'une des revendications 1 à 4, caractérisé par le fait que la découpe avec dépouille de la rainure (28) et le bord biseauté (30) possèdent chacun une forme en arc d'à peu près 100°.

6. Récipient selon la revendication 4, caractérisé par le fait que l'arc de 100 sur les parties de récipient (11 et 12) est disposé de manière qu'un dégagement de la partie couvercle des parois latérales (17 et 18) de la partie fond ne soit possible qu'en position ou au voisinage de la position de fermeture des parties de récipient (11 et 12).

7. Récipient selon la revendication 5, caractérisé par le fait qu'il est prévu, dans les parois latérales (17, 18) de la partie fond, parallèlement au bord biseauté, (30), une fente (31) concentrique à ce bord et d'une largeur correspondant à peu près à la largeur du bord annulaire (27).

8. Récipient selon la revendication 1, caractérisé par le fait que l'articulation (23) est constituée par une saillie cylindrique (24) sur chaque paroi latérale (21 et 22) de la partie couvercle et une ouverture circulaire (25) dans chaque paroi latérale (17 et 18) de la partie fond.

9. Récipient selon la revendication 8, caractérisé par le fait qu'au moins sur les saillies cylindriques (24) sont prévues des coupes obliques de montage (36) pour faire glisser dessus les parois latérales (17, 18) de la partie fond.

10. Récipient selon la revendication 8 ou 9, caractérisé par le fait que des coupes obliques de montage (37) sont prévues sur les extrémités de parois latérales (17a et 18a) de la partie fond.

11. Récipient selon la revendication 1 ou l'une des revendications 2 à 10, caractérisé par le fait que la paroi de fond (14) de la partie fond (11) présente une découpe (15) qui est limitée latéralement par les parois latérales (17, 18) de la partie fond, et la partie couvercle (12) est formée avec une poche (13) constituée de paroi avant (16), paroi fond (20) et parois latérales (21, 22), la périphérie de la paroi avant (16) correspondant au contour de le découpe (15).

12. Récipient selon la revendication 11, caractérisé par le fait que la paroi avant (18) présente une découpe sensiblement en U symétrique par rapport à son plan médian et la paroi avant (16) est repliée contre les paroi latérales (21, 22).

13. Récipient selon la revendication 1, caractérisé par le fait que la rainure (28) du bord annulaire (27) présente, en coupe, au moins un redent et les extrémités de parois latérales (17a et 18a) de la partie font sont formées avec des bords étagés correspondants.

## Claims

1. An essentially rectangular storage container for flat articles, in particular magnetic recording media in packages, which possesses a bottom part (11), consisting of a base wall (14) bordered on two sides by side walls (17, 18) of the bottom part, and a lid part (12), consisting of a lid wall (9) partially or completely bordered at the sides by side walls (21, 22) of the lid part, and a joint device (23) between the bottom and the lid part (11 and 12), and which possesses a circular edge (27) arranged on the outside of each of the side walls (21 and 22) of the lid part or on the inside of each of the side walls (17 and 18) of the bottom part, and counterparts provided on the other side walls (17 and 18 or 21 and 22) in order to effect compulsory interlocking of the base and lid parts (11 and 12) dependent on the angle of rotation, which is, defined by a groove (28) on each circular edge (27) as the first locking part, and in each case a second locking part (30) which partially or completely engages the groove (28).

2. A container as claimed in claim 1, wherein the groove (28) is formed by an undercut in the circular edge (27).

3. A container as claimed in claim 2, wherein the cross-sectional angle ( ) of the undercut is from 45 to 90°, in particular 60°.

4. A container as claimed in claim 2, wherein the side walls (17 and 18) of the bottom part have semicircular ends (17a and 18a) which possess a beveled edge (30) on their periphery.

5. A container as claimed in claim 1 or 2 or 3 or 4, wherein the undercut of the groove (28) and the beveled edge (30) are each roughly in the form of a 100° arc.

6. A container as claimed in claim 4, wherein the 100° arc of the container parts (11 and 12) is arranged so that the side walls (17 and 18) of the bottom part can be disengaged from the lid part (12) exclusively in, or near, the closed position of the container parts (11 and 12).

7. A container as claimed in claim 5, wherein a slot (31) about as wide as the circular edge (27) is provided in the side walls (17 and 18) of the bottom part, parallel with, and concentric to, the beveled edge (30).

8. A container as claimed in claim 1, wherein the joint (23) consists in each case of a cylindrical projection (24) at each side wall (21 and 22) of the lid part, and a circular opening (25) in each side wall (17 or 18) of the bottom part.

9. A container as claimed in claim 8, wherein at least the cylindrical projections (24) are provided with sloping surfaces (36) to permit the side walls (17 and 18) of the bottom part to be pushed over for assembly.

10. A container as claimed in claim 8 or 9, wherein sloping surfaces (37) for assembly are provided on the ends (17a and 18a) of the side walls of the bottom part.

11. A container as claimed in claim 1 and one or more of claims 2 to 10, wherein the base wall (14) of the bottom part (11) has a cutout (15) which is bordered laterally by the side walls (17, 18) of the bottom part, and the lid part (12) possesses a pocket (13) consisting of a front wall (16), a base wall (20) and side walls (21, 22), the outline of the front wall (16) corresponding to the contour of the cutout (15).

12. A container as claimed in claim 11, wherein the front wall (16) has a roughly U-shaped cutout which is symmetrical about its middle, and the front wall (16) is higher toward the side walls (21, 22).

13. A container as claimed in claim 1, wherein the cross-section of the groove (28) in the circular edge (27) has one or more steps, and the ends (17a and 18a) of the side walls of the bottom part possess corresponding stepped edges.

FIG.1

FIG. 2

FIG. 3

FIG.4

FIG.5

EP 0 142 087 B1